# EUROPÄISCHE PATENTSCHRIFT

(11) **EP 4 034 762 B1**
(45) Veröffentlichungstag und Bekanntmachung des Hinweises auf die Patenterteilung: **28.01.2026**
(21) Anmeldenummer: 20781462.5
(22) Anmeldetag: 24.09.2020
(51) Int. Cl.: F03D 1/06

(54) **PITCH-ANTRIEBSREGLER EINER WINDKRAFTANLAGE, PITCH-ANTRIEBSSTEUERGERÄT UND VERFAHREN ZUM STEUERN EINES PITCH-ANTRIEBSREGLERS**
PITCH DRIVE CONTROLLER FOR A WIND TURBINE, PITCH DRIVE CONTROL DEVICE, AND METHOD FOR CONTROLLING A PITCH DRIVE CONTROLLER
CONTRÔLEUR DE COMMANDE DE PAS POUR UNE ÉOLIENNE, DISPOSITIF DE CONTRÔLE DE COMMANDE DE PAS ET PROCÉDÉ POUR CONTRÔLER UN CONTRÔLEUR DE COMMANDE DE PAS

(30) Priorität: 25.09.2019 DE 102019125789
(43) Veröffentlichungstag der Anmeldung: 03.08.2022
(73) Patentinhaber: KEBA Industrial Automation Germany GmbH, 35633 Lahnau (DE)
(72) Erfinder: BACH-PRECKWINKEL, Heiko, 35633 Lahnau (DE); WERTZ, Harald, 35633 Lahnau (DE); JOTZO, Daniel, 35633 Lahnau (DE); NIERMANN, Frank, 35633 Lahnau (DE); BUDDE, Stefan, 35633 Lahnau (DE); BORGSCHULTE, Bernd, 35633 Lahnau (DE)
(74) Vertreter: Keil & Schaafhausen Patentanwälte PartGmbB
(86) Internationale Anmeldenummer: PCT/EP2020/076739
(87) Internationale Veröffentlichungsnummer: WO 2021/058654

(56) Entgegenhaltungen:
- EP-A1- 1 763 126
- CN-A- 101 624 969
- NZ-A- 556 642
- US-A1- 2009 169 378
- US-A1- 2016 245 257

## Beschreibung

Es wird ein Pitch-Antriebsregler einer Windkraftanlage mit mehreren an einer Rotornabe festgelegten Rotorblättern zur elektromotorischen Drehverstellung der Rotorblätter an der Rotornabe beschrieben. Der Pitch-Antriebsregler weist für jedes Rotorblatt jeweils mindestens ein Pitch-Antriebssteuergerät zur Ansteuerung mindestens eines Pitch-Antriebsmotors auf. Es wird also zur elektromotorischen Drehverstellung jedes der Rotorblätter ein Pitch-Antriebssteuergerät oder auch mehr als ein Pitch-Antriebssteuergerät verwendet, wobei die einzelnen Pitch-Antriebssteuergeräte jeweils einen Pitch-Antriebsmotor oder auch jeweils mehr als einen Pitch-Antriebsmotor ansteuern. Es ist auch möglich, dass einzelne Pitch-Antriebsmotoren durch jeweils mehr als ein Pitch-Antriebssteuergerät angesteuert werden oder angesteuert werden können. Die Ansteuerung eines Pitch-Antriebsmotors durch mehr als ein Pitch-Antriebssteuergerät kann dabei so erfolgen, dass der Pitch-Antriebsmotor zeitgleich von mehr als einem Pitch-Antriebssteuergerät angesteuert wird oder so, dass er zu jedem Zeitpunkt nur von einem Pitch-Antriebssteuergerät angesteuert wird, jedoch die Ansteuerung von einem Pitch-Antriebssteuergerät auf ein anderes Pitch-Antriebssteuergerät umgeschaltet werden kann.

Jedes der Pitch-Antriebssteuergeräte weist eine Ansteuerelektronik für den Pitch-Antriebsmotor und einen Steuerausgang zu dem Pitch-Antriebsmotor auf, wobei der Pitch-Antriebsmotor über den Steuerausgang insbesondere mit der zu seinem Antrieb erforderlichen elektrischen Leistung aus der Ansteuerelektronik versorgt wird. Ferner kann die Möglichkeit bestehen, über den Steuerausgang oder eine gesonderte Signalschnittstelle Sensorsignale zwischen Pitch-Antriebssteuergerät und Pitch-Antriebsmotor auszutauschen.

Ferner enthält jedes Pitch-Antriebssteuergerät eine Recheneinheit mit mindestens einem zum Betrieb des Pitch-Antriebssteuergeräts eingerichteten Prozessor.

Ein System nach dem Oberbegriff der Ansprüche 1 und 5 wird in der NZ 556 642 A beschrieben.

Die CN 101624 969 A offenbart ein System mit mehreren Servo-Control-Units zur Ansteuerung von Pitch-Motoren, wobei eine Servo-Control-Unit aus Redundanzgründen zwei Pitch Motoren ansteuern kann. Aus der US 2009/0169378 A1 ist eine Pitch-Ansteuerung bekannt, bei der einzelne Pitch-Antriebe für ein Rotorblatt Eingänge für Sensoren auch anderer Rotorblätter aufweisen können. Die EP 1 763 126 A1 beschreibt eine Pitch-Regler, bei denen die einzelnen Pitch-Antriebssteuerungen über ein Bussystem mit einer übergeordneten zentralen Steuerung einer Windkraftanlage kommunizieren.

Zumindest ein erfindungsgemäßes Pitch-Ansteuergerät des erfindungsgemäßen Pitch-Antriebsreglers weist auch einen externen Kommunikationsanschluss an eine zentrale Steuerung der Windkraftanlage auf. Dies ermöglicht, dass die in einem Verband zusammengeschlossenen Pitch-Ansteuergeräte zumindest über das mindestens eine Pitch-Ansteuergerät mit der externen Schnittstelle mit der zentralen Steuerung kommunizieren können. In einer bevorzugten erfindungsgemäßen Ausführung können auch mehrere oder alle Pitch-Ansteuergeräte des Pitch-Antriebsreglers eine solchen externe Kommunikationsanschluss aufweisen. Dies erhöht die Redundanz.

Ferner können die einzelnen Pitch-Antriebssteuergeräte jeweils ein oder mehr als ein Applikationsmodul aufweisen, das einen oder mehr als einen Prozessor zum Betrieb des Antriebssteuergerätes aufweist, und/oder eine oder mehr als eine zusätzliche Schnittstelle für optische oder elektrische Signale aufweisen.

Es werden auch ein Pitch-Antriebssteuergerät und ein Verfahren zum Steuern eines Pitch-Antriebsreglers beschrieben.

Häufig umfasst die Ansteuerelektronik jedes der Pitch-Ansteuergeräte einen Wechselrichter, über den der Pitch-Antriebsmotor angesteuert wird. Vor diesem Hintergrund werden "Pitch-Ansteuergeräte" auch als "Pitch-Wechselrichter" bezeichnet. Im folgenden Text werden diese beiden Bezeichnung synonym verwendet. Damit wird im Sinne dieses Textes unter einem "Pitch-Wechselrichter" immer auch allgemeiner ein "Pitch-Ansteuergerät" verstanden, unabhängig davon, ob die Elektronik des "Pitch-Ansteuergeräts" tatsächlich einen Wechselrichter zur Umwandlung von Wechselstrom und Gleichstrom aufweist oder nicht. Der Gegenstand der Erfindung ist unabhängig von der konkreten elektrischen Umsetzung der Ansteuerung des Pitch-Antriebsmotors durch das Pitch-Antriebssteuergerät.

Üblicherweise sind solche Pitch-Wechselrichter (oder allgemeiner: Pitch-Ansteuergeräte) über einen Feldbus an eine Zentralsteuerung angebunden, welche Sollwerte an die Wechselrichter sendet und Messwerte empfängt. Eine direkte Kommunikationsverbindung zwischen den Pitch-Wechselrichtern gibt es nicht. Somit muss die gesamte Kommunikation zwischen den Pitch-Wechselrichtern über die zentrale Steuerung erfolgen. Dies ist aufwendig und zeitintensiv. Außerdem führen Störungen in dem vergleichsweise langen Kommunikationsweg oder in der Zentralsteuerung dazu, dass in den Pitch-Wechselrichtern bestimmte Informationen unter Umständen nicht mehr vorliegen.

Die Aufgabe der vorliegenden Erfindung liegt also darin, die Kommunikation zwischen den Pitch-Antriebssteuergeräten der einzelnen Rotorblätter einer Rotornabe zu verbessern.

Diese Aufgabe wird durch einen Pitch-Antriebsregler einer Windkraftanlage mit den Merkmalen des Anspruchs 1, ein Pitch-Antriebssteuergerät mit den Merkmalen des Anspruchs 5 und Verfahren zum Steuern eines Pitch-Antriebsreglers mit den Merkmalen des Anspruchs 14 gelöst. Vorteilhafte Ausgestaltungen finden sich in den Unteransprüchen.

Dazu ist bei einem Pitch-Antriebsregler der eingangs genannten Art vorgesehen, dass jedes der Pitch-Antriebssteuergeräte einen lokalen Kommunikationsanschluss aufweist und über diesen lokalen Kommunikationsanschluss mit den anderen Pitch-Antriebssteuergeräten der Windkraftanlage in einer Querkommunikation verbunden ist. Insbesondere sind alle in der Querkommunikation miteinander verbundenen Pitch-Antriebssteuergeräte in derselben Rotornabe der Windkraftanlage angeordnet. In dieser Ausgestaltung werden kurze Kommunikationswege in der Querkommunikation aller Pitch-Antriebssteuergeräte des Pitch-Antriebsreglers erreicht. Jeder der Pitch-Antriebssteuergeräte kann daher den Kommunikationsanschluss und den von diesem ausgehenden Kommunikationskanal mit den anderen Pitch-Antriebssteuergeräten kommunizieren und Daten austauschen, ohne dass eine Kommunikation zu der zentralen Steuerung der Windkraftanlage notwendig ist.

Diese Querkommunikation kann in einer erfindungsgemäßen Ausführungsform als eine Feldbus-Kommunikation ausgebildet sein. Der Feldbus stellt eine robuste, zuverlässige Kommunikation für ein industrielles Umfeld dar und ermöglicht den Anschluss mehrerer Pitch-Antriebssteuergeräte in einer geschlossenen Datenbus-Verkabelung. Erweiterungen oder Redundanzen der Verkabelung lassen sich in einer Datenbus-Verkabelung einfach erreichen.

In einer anderen erfindungsmäßen Ausgestaltung kann die Querkommunikation als eine Punkt-zu-Punkt-Kommunikation ausgebildet sein. Diese wird vorteilhafter Weise durch eine direkte Verkabelung zwischen zwei Kommunikationspartnern erreicht. Hierdurch lassen sich einfache und robuste Kommunikationsprotokolle verwenden.

In einer weiteren erfindungsgemäßen Ausgestaltung kann die Querkommunikation über einen oder mehrere Netzwerkknoten erfolgen, die ebenfalls einfache und robuste Kommunikationsprotokolle ermöglichen.

Die Pitch-Antriebssteuergeräte des Pitch-Antriebsreglers können erfindungsgemäß dazu einrichtet sein, eine oder mehrere der nachfolgend definierten Datenarten auszutauschen:
- Sollwerte, insbesondere der Regelung für die Rotorblattstellung
- Istwerte, insbesondere der Regelung für die Rotorblattstellung
- Empfangene und/oder von mit dem Pitch-Antriebssteuergerät verbundenen Sensoren erfasste Messwerte
- Berechnete Werte, insbesondere aus den empfangenen und/oder erfassten Messwerten
- Betriebsparameter des Pitch-Antriebssteuergeräts, einschließlich des Softwarestands von Applikationssoftware und/oder Firmware oder eines installierbaren Datenverarbeitungsprogramms mit der Applikationssoftware und/oder der Firmware oder Software-Updates
- Absolute oder relative Zeitinformation
- Datenpakete aus Sicherheitsmodulen der Pitch-Antriebssteuergeräte selbst, des Pitch-Antriebsreglers und/oder der Zentralsteuerung der Windkraftanlage

Der Austausch der Datenwerte kann insbesondere im Rahmen der im Folgenden noch ausführlicher beschriebenen Verfahren oder Verfahrensschritte erfolgen. Dazu ist die Recheneinheit der Pitch-Ansteuergeräte zur Durchführung der jeweiligen Verfahrensschritte eingerichtet, ggf. im Zusammenwirken mit der Recheneinheit mindestens eines weiteren Pitch-Ansteuergeräts, wobei die zusammenwirkenden Pitch-Ansteuergeräte über die erfindungsgemäße Querkommunikation miteinander verbunden sind.

Gemäß einer bevorzugten Ausführung des vorgeschlagenen Pitch-Antriebsreglers ist in dem Pitch-Antriebsregler mindestens ein Pitch-Antriebssteuergerät mit einem externen Kommunikationsanschluss an eine zentrale Steuerung der Windkraftanlage vorgesehen. Damit ist es möglich, eine Kommunikation zu einer zentralen Steuerung (zentrale Kommunikation) und die vorgeschlagene Querkommunikation (lokale Kommunikation) parallel zu betreiben. Damit können der erfindungsgemäß vorgeschlagene Pitch-Antriebsregler und/oder die erfindungsgemä-ßen Pitch-Antriebssteuergeräte mit der (zusätzlichen) Querkommunikation auch in herkömmlichen Windkraftanlagen mit zentraler Steuerung betrieben werden, indem die Steuerung grundsätzlich zentral erfolgt und durch die Querkommunikation bspw. weitere Steuerungs- und Sicherheitsmerkale, wie sie in diesem Text beschrieben sind, ergänzend realisiert werden. Dies führt zu einem erheblich verbesserten und sichereren Betrieb der Windkraftanlagen. In einer bevorzugten Ausführungsform dieser parallel betriebenen zentralen Kommunikation und Querkommunikation (lokale Kommunikation) kann vorgesehen sein, dass zumindest ein Pitch-Antriebssteuergerät für jeden Pitch-Antrieb (insbesondere im Sinne von Pitch-Antriebsmotor) neben dem lokalen Kommunikationsanschluss auch den externen Kommunikationsanschluss aufweist. Erfindungsgemäß kann die lokale und die zentrale Kommunikation technisch über eine gemeinsame (d.h. dieselbe) Kommunikation, bspw. eine Feldbus-Kommunikation mit bspw. den jeweils entsprechenden lokalen bzw. zentralen Kommunikationsadressen, realisiert sein. Es ist erfindungsgemäß aber auch möglich, dass technisch unterschiedliche Kommunikationsarten und damit separate und vorzugsweise unabhängig voneinander arbeitende Kommunikationssysteme verwendet werden. Dies erhöht die Redundanz, bspw. indem die erfindungsgemäß vorgeschlagene Querkommunikation bei Ausfall der zentralen Kommunikation autark eine Sicherheitssteuerung übernimmt.

Wenn nicht jedes Pitch-Antriebssteuergerät - oder nicht zumindest eines von ggf. mehreren Pitch-Antriebssteuergeräten für einen Pitch-Antriebsmotor zur Verstellung eines Rotorblatts - einen externen Kommunikationsanschluss zur zentralen Kommunikation an die zentrale Steuerung aufweist, kann die Recheneinheit des/eines mit dem externen Kommunikationsanschluss ausgebildeten Pitch-Antriebssteuergeräts dazu ausgebildet sein, eine Gateway-Funktion zu übernehmen und eine Kommunikation der zentralen Steuerung und der nur mit der lokalen Querkommunikation ausgestatteten Pitch-Antriebssteuergeräte zu vermitteln. Diese Funktion kann auch bei Ausfall eines externen Kommunikationsanschlusses eines Pitch-Antriebssteuergerätes genutzt werden, indem die Kommunikation zu der zentralen Steuerung über ein anderes, als Gateway dienendes Pitch-Antriebssteuergerät erfolgt.

Die Erfindung betrifft ferner ein Pitch-Antriebssteuergerät zur Ansteuerung eines Pitch-Antriebsmotors, wobei das Pitch-Antriebssteuergerät eine Ansteuerelektronik, einen Steuerausgang zu dem Pitch-Antriebsmotor, eine Recheneinheit mit einem zum Betrieb des Pitch-Antriebssteuergeräts eingerichteten Prozessor und einen externen Kommunikationsanschluss an eine zentrale Steuerung der Windkraftanlage aufweist. Erfindungsgemäß ist vorgesehen, dass das Pitch-Antriebssteuergerät einen lokalen Kommunikationsanschluss aufweist und über diesen lokalen Kommunikationsanschluss mit den anderen Pitch-Antriebssteuergeräten der Windkraftanlage in einer Querkommunikation verbindbar ist. Mehrere dieser über die Querkommunikation verbundenen Pitch-Antriebssteuergeräte bilden dann den Pitch-Antriebsregler der Windkraftanlage. Bei üblichen Windkraftanlagen mit drei Rotorblättern sind entsprechend üblicherweise auch mindestens drei Pitch-Antriebssteuergeräte vorgesehen.

Die Querkommunikation ist erfindungsgemäß insbesondere dazu ausgebildet, dass diese nur mit anderen Pitch-Antriebssteuergeräten der Windkraftanlage, insbesondere nur mit den in derselben Rotornabe der Windkraftanlagen aufgenommenen Pitch-Antriebssteuergeräten, erfolgt. Dies kann bspw. durch eine Beschränkung von verwendeten und/oder verwendbaren Kabellängen zur Querkommunikation erreicht werden, bspw. im Rahmen einer Feldbuskommunikation oder einer Punkt-zu-Punkt-Verbindung. Entsprechend bezieht sich die Erfindung auf die Verwendung eines solchen Pitch-Antriebssteuergeräts in einer Querkommunikation von Pitch-Antriebssteuergeräten in derselben Rotornabe einer Windkraftanlage.

Der lokale Kommunikationsanschluss kann erfindungsgemäß eine kabelgebundene elektrische und/oder optische Schnittstelle umfassen. Grundsätzlich ist auch eine drahtlose Querkommunikation mit fachüblichen drahtlosen Kommunikationsschnittstellen denkbar. In dem Umfeld einer Windkraftanlage erweist sich eine kabelgebundene Kommunikation aber in der Regel als robuster und zuverlässiger. Der Kommunikationsanschluss kann vorzugsweise zur Herstellung einer Feldbus-Datenverbindung oder einer proprietären Datenverbindung eingerichtet sein. Eine optische Querkommunikation ist besonders robust gegen elektromagnetische Störfelder; in der Regel kann aber auch kabelgebundene elektrische Datenverbindung eine zuverlässige Kommunikation ermöglichen, ggf. bei entsprechender Abschirmung der Datenleitung.

In einer erfindungsgemäßen Ausgestaltung kann das Pitch-Antriebssteuergerät integrierte und/oder anschließbare Sensoren zur Messwerterfassung aufweisen (mindestens einen Sensor). Die Recheneinheit des Pitch-Ansteuergeräts ist dann zur Bearbeitung der erfassten Messwerte eingerichtet. Die Bearbeitung der Messwerte kann eine Auswertung der Messwerte und/oder eine Übertragung der Messwerte an den zentralen Server umfassen. Dies ermöglicht, dass ein Pitch-Antriebssteuergerät den Zustand von Hardwarekomponenten und/oder Zuständen der Windkraftanlage durch Überwachen von Messgrößen und/oder Rechengrößen (Rechenwerte) bspw. mittels Schwellwerterkennung, Prüfen gegen einen gültigen Wertebereich, Langzeitauswertung eines Mittelwerts, Schnelle Fourier-Transformationen (*Fast Fourier Transform FFT*) zur Zerlegung eines digitalen Signals in seine Frequenzanteile und deren Analyse, Berechnung von Häufigkeitsverteilungen (Histogramm), Adaption einer Kennlinie oder eines Kennfeldes, Verwendung als Trainingsdaten für ein künstliches neuronales Netz oder dgl. bestimmen kann.

In einer weiteren erfindungsgemäßen Ausgestaltung kann eine Überprüfung mindestens eines Sensors im Pitch-Antriebssteuergerät erfolgen, indem dessen Messwert mit dem Messwert mindestens eines entsprechenden Sensors in mindestens einem anderen der Pitch-Antriebssteuergeräte verglichen wird, vorzugsweise in derselben Windkraftanlage oder auch in benachbarten Windkraftanlagen. Dabei wird angenommen, dass die betrachtete Messgröße bei den Messungen in den betrachteten Pitch-Antriebssteuergeräten identisch oder zumindest innerhalb einer Toleranz identisch ist. Die zu diesem Zweck betrachtete Messgröße kann beispielsweise die Frequenz der Spannung des elektrischen Versorgungsnetzes sein, aber auch dessen Spannung kann sich für diesen Zweck eignen. Innerhalb einer Windkraftanlage kann auch eine Temperaturmessung für diesen Zweck verwendet werden, indem beispielsweise ein Temperatursensor außerhalb des Pitch-Antriebssteuergerätes verwendet wird, insbesondere ein an einer Notstromversorgung angeordneter Temperatursensor. Insbesondere kann die Recheneinheit eines Pitch-Antriebssteuergerätes (oder mehrerer oder aller der Pitch-Antriebssteuergeräte in der einen Windkraftanlage oder auch in mehreren Windkraftanlagen) zur Durchführung der Überprüfung des Sensors eingerichtet sein, wobei der Sensor in das Pitch-Ansteuergerät integriert oder an einen Sensoranschluss des Pitch-Ansteuergerätes anschlossen sein kann.

In einer weiteren erfindungsgemäßen Ausgestaltung kann innerhalb eines Pitch-Antriebssteuergerätes eine Signalumwandlung mehr als eines Sensors des Pitch-Antriebssteuergerätes durch einen (denselben) Analog-Digital-Wandler (ADC) des Pitch-Antriebssteuergerätes erfolgen. Erfindungsgemäß kann eine Überprüfung dieses einen ADC erfolgen, indem ein mit ihm analog-digital-gewandelter Messwert mit dem Messwert mindestens eines entsprechenden Sensors in mindestens einem anderen Pitch-Antriebssteuergerät verglichen wird (bspw. in derselben Windkraftanlage oder auch in benachbarten Windkraftanlagen, d.h. mit ähnlichen Umgebungs- und/oder Betriebsbedingen. Dabei wird angenommen, dass die betrachtete Messgröße bei den Messungen in den betrachteten Pitch-Antriebssteuergeräten identisch oder zumindest innerhalb einer Toleranz identisch ist. Die zu diesem Zweck betrachtete Messgröße kann beispielsweise die Frequenz der Spannung des elektrischen Versorgungsnetzes sein, aber auch dessen Spannung kann sich für diesen Zweck eignen. Innerhalb einer Windkraftanlage kann auch eine Temperaturmessung für diesen Zweck verwendet werden, indem beispielsweise ein Temperatursensor außerhalb des Pitch-Antriebssteuergerätes verwendet wird, insbesondere ein an einer Notstromversorgung angeordneter Temperatursensor. Insbesondere kann die Recheneinheit eines Pitch-Antriebssteuergerätes (oder mehrerer oder aller der Pitch-Antriebssteuergeräte bspw. in einer Windkraftanlage oder auch mehreren Windkraftanlagen) zur Durchführung der Überprüfung entsprechend eingerichtet sein.

In einer weiteren erfindungsgemäßen Ausgestaltung kann das Pitch-Antriebssteuergerät ein Sicherheitsmodul umfassen, in dem Sicherheitsfunktionen implementiert sind, die auf Grundlage von in dem Sicherheitsmodul erfassten und verarbeiteten Daten ausführbar sind. Erfindungsgemäß bevorzugt beinhalten die erfassten Daten zumindest auch von mindestens einem Pitch-Antriebssteuergerät in der Querkommunikation erhaltene Daten, wobei die Recheneinheit des Pitch-Antriebssteuergeräts dazu eingerichtet ist, diese Daten in dem Sicherheitsmodul mit auszuwerten. So lässt sich über den Verbund der Pitch-Antriebssteuergeräte durch die Querkommunikation eine Redundanz erreichen, ohne dass in einem Pitch-Antriebssteuergerät alleine eine solche Redundanz erreicht werden muss. Dies führt zu Kostenvorteilen bei erhöhter Sicherheit, insbesondere wenn - wie in Windkraftanlagen üblich - mindestens drei Rotorblätter mit jeweils einem eigenen Pitch-Antriebssteuergerät vorgesehen sind. Dies führt dann zwangsläufig zu einer doppelten Redundanz, ohne dass weitere Komponenten in dem einen Pitch-Antriebssteuergerät vorgesehen werden müssen.

Ein wichtiger Vorteil kann sich ergeben, wenn die Recheneinheit des Pitch-Antriebssteuergeräts gemäß einer möglichen Ausführungsform der Erfindung dazu eingerichtet ist, Messwerte und/oder Sollwerte zur Drehverstellung des Rotorblatts an andere in der Querkommunikation verbundene Pitch-Antriebssteuergeräte zu senden und/oder von den anderen Pitch-Antriebssteuergeräten zu empfangen. Aufgrund empfangener Messwerte und/oder Sollwerte kann die Recheneinheit dann lokal in die Pitch-Antriebsregelung eingreifen. Hierbei ermöglicht die lokale Querkommunikation in der Rotornabe der Windkraftanlage eine besonders schnelle Kommunikation mit einer gegenüber einer Kommunikation zu der zentralen Steuerung der Windkraftanlage signifikant verkürzten Latenz. Hierdurch wird die Dynamik der Pitch-Antriebsregelung erheblich verbessert.

Ferner kann die Recheneinheit des Pitch-Antriebssteuergeräts dazu eingerichtet sein, Messwerte und/oder Sollwerte und/oder Rechenwerte von anderen Pitch-Antriebssteuergeräten zu empfangen und in dem Pitch-Antriebssteuergerät selbst erfasste Messwerte gegen einen Erwartungswert aus den von den anderen Pitch-Antriebssteuergeräten empfangenen Messwerten und/oder Sollwerten und/oder Rechenwerten zu überprüfen. Hierdurch lassen sich Monitoring und Diagnose verbessern, weil diese mit aktuellen Daten und lokal in dem Pitch-Antriebssteuergerät durchgeführt werden können.

In einer weiter bevorzugten Ausgestaltung der Erfindung kann das Pitch-Antriebssteuergerät eine Eingabeschnittstelle mit einer Benutzereingabeeinrichtung und mindestens einer Anzeigeeinrichtung aufweisen. die Benutzereingabeeinrichtung kann Tasten zur Benutzereingabe ausweisen. Die Anzeigeeinrichtung kann ein Display sein oder einfach eine oder mehrere Lichtzeichen, bspw. LEDs, aufweisen. Somit können eine Parametrierung und Einstellung des Pitch-Antriebssteuergeräts bspw. bei einer Inbetriebnahme einfach am Installationsort, d.h. üblicher Weise in der Rotornabe der Windkraftanlage, erfolgen. Dort ist der verfügbare Raum in der Regel sehr begrenzt. Dies erschwert den Einsatz von Inbetriebnahme- und Servicegeräten wie Laptops. Durch die Eingabeschnittstelle (Human Machine Interface HMI) werden zusätzliche Geräte im Service- oder Inbetriebnahmefall in vielen Fällen verzichtbar.

Eine weitere Erleichterung im Kommunikationsablauf kann erfindungsgemäß durch die vorgeschlagene Querkommunikation erreicht werden, indem die Recheneinheit des Pitch-Antriebssteuergerät gemäß einer Ausführungsform dazu eingerichtet ist, Einstellparameter des Pitch-Antriebssteuergeräts und/oder ein installierbares Abbild der Software über die Querkommunikation auf ein anderes der Pitch-Antriebssteuergeräte zu übertragen und in dem anderen Pitch-Antriebssteuergerät zu speichern. Die Einstellparameter können insbesondere in der Software zur Steuerung des Pitch-Antriebssteuergeräts eingebbar bzw. vorgebbar sein. Durch Eingabe dieser Einstellparameter kann das Pitch-Antriebssteuergerät bei der Inbetriebnahme für die spezielle Windkraftanlage konfiguriert werden. Das installierbare Abbild der Software, kann bspw. eine Installationsdatei für die Einrichtung der Applikationssoftware auf der Recheneinheit des Pitch-Antriebssteuergeräts (einschließlich auch Updates hierfür) und/oder ein Softwareimage des Pitch-Antriebssteuergeräts sein. Damit gibt es in dieser Erfindungsvariante ein vollständiges Backup des Pitch-Antriebssteuergeräts (auch) lokal in den über die Querkommunikation adressierbaren anderen Pitch-Antriebssteuergeräten der Windkraftanlage, auf das auch in der Querkommunikation zugegriffen werden kann.

Hierzu kann die Recheneinheit des Pitch-Antriebssteuergeräts in Weiterentwicklung dieser Ausführungsform der Erfindung dazu eingerichtet sein, bei dem Austausch eines der Pitch-Antriebssteuergeräte der Windkraftanlage die (zuvor gespeicherten) Einstellparameter des Pitch-Antriebssteuergeräts und/oder das installierbare Abbild der Software aus einem der anderen Pitch-Ansteuergeräte über die Querkommunikation abzurufen und in der Recheneinheit des ausgetauschten Pitch-Antriebssteuergeräts einzurichten. Dies kann aufgrund einer Interaktion mit dem Nutzer über die Eingabeschnittstelle und/oder durch eine automatisierte Abfrage der über die Querkommunikation erreichbaren Pitch-Antriebssteuergeräte erfolgen. Durch eine solche Installation eines Softwareabbilds und/oder aller einstellbaren Parameter (bspw. über die Software ein- bzw. vorgebare Einstellparameter) kann das Austauschgerät genauso parametriert werden wie das ausgetauschte Gerät. Dies erleichtert Serviceeinsätze an der Windkraftanlage.

Unter dem zuvor beschriebenen Austausch eines der Pitch-Antriebssteuergeräte versteht der vorliegende Text neben dem Austausch des kompletten Geräts auch den Austausch eines Applikationsmoduls eines Pitch-Antriebssteuergeräts, das von der Software und/oder den Parametereinstellungen betroffen ist und diese verwendet. Bspw. kann auf Applikationsmodul die Steuer- und Regelsoftware implementiert sein. Auch im Falle des Austausch eines Applikationsmoduls des Pitch-Antriebssteuergeräts kann das neu eingesetzte Applikationsmodul über die Querkommunikation von einem anderen Pitch-Antriebssteuergerät parametriert werden oder eine Software erhalten, die auf dem neu eingesetzten Applikationsmodul installiert wird. Dies ist auch mit der Formulierung "Austausch eines der Pitch-Antriebssteuergeräte" gemeint.

Die Erfindung betrifft auch ein Verfahren zum Steuern des bereits beschriebenen Pitch-Antriebsreglers einer Windkraftanlage mit mindestens zwei, vorzugsweise drei, Pitch-Antriebssteuergeräten, die insbesondere in einer Rotornabe der Windkraftanlage angeordnet sind und den vorbeschriebenen Aufbau haben können. Erfindungsgemäß sind die Recheneinheiten der Pitch-Antriebssteuergeräte dazu eingerichtet, mittels der Querkommunikation (vorzugsweise innerhalb der Rotornabe), und gerade nicht über eine zentrale Steuerung der Windkraftanlage ( die meist außerhalb der Rotornabe angeordnet ist) miteinander zu kommunizieren und Daten untereinander auszutauschen und/oder zu speichern. Das Verfahren kann dabei insbesondere die zuvor erläuterten Verfahrensschritte einzeln, zusammen bzw. in beliebiger Kombination ausführen.

Entsprechend können die Recheneinheiten der Pitch-Antriebssteuergeräte insbesondere zur Durchführung eines oder mehrerer der nachstehenden Verfahrensschritte eingerichtet sein:
- Übertragen und Speichern der Einstellparameter eines der Pitch-Antriebssteuergeräte und/oder eines installierbaren Abbilds der Software dieses einen der Pitch-Antriebssteuergeräte mittels der Querkommunikation auf ein anderes der Pitch-Antriebssteuergeräte;
- Auslesen mittels der Querkommunikation und Installieren der in einem der Pitch-Antriebssteuergeräte gespeicherten Einstellparameter und/oder des gespeicherten installierbaren Abbilds der Software in einem anderen der Pitch-Antriebssteuergeräte;
- Empfangen von Messwerten und/oder Sollwerten und/oder Rechenwerten von anderen Pitch-Antriebssteuergeräten mittels der Querkommunikation und Überprüfen eines in dem Pitch-Antriebssteuergerät selbst erfassten Messwerts und/oder Rechenwertes gegen einen Erwartungswert, der aus von den anderen Pitch-Antriebssteuergeräten empfangenen Messwerten und/oder Sollwerten und/oder Rechenwerten ermittelt wird;
- Senden von Messwerten und/oder Sollwerten und/oder Rechenwerten zur Drehverstellung des Rotorblatts an andere in der Querkommunikation verbundene Pitch-Antriebssteuergeräte;
- Empfangen von Messwerten und/oder Sollwerten und/oder Rechenwerten zur Drehverstellung des Rotorblatts von den anderen Pitch-Antriebssteuergeräten mittels der Querkommunikation und lokales Eingreifen in die Pitch-Antriebsregelung aufgrund der empfangenen Messwerte und/oder Sollwerte und/oder Rechenwerten;
- Empfangen von Daten zumindest auch von mindestens einem Pitch-Antriebssteuergerät mittels der Querkommunikation und Auswerten dieser Daten in dem Sicherheitsmodul zur Umsetzung von Sicherheitsfunktionen.

Erfindungsgemäß können diese und weitere auf der erfindungsgemäß vorgeschlagenen Querkommunikation basierende Verfahren bzw. Verfahrensschritte oder Teile hiervon, wie sie in diesem Text beschrieben sind, umgesetzt werden, um die Dynamik der Steuerung, die Wartung und die Sicherheit von Windkraftanlagen zu erhöhen.

Weitere Vorteile, Merkmale und Anwendungsmöglichkeiten der Erfindung ergeben sich auch aus der nachfolgenden Beschreibung von Ausführungsbeispielen und der Zeichnung. Dabei gehören alle beschriebenen und/oder bildlich dargestellten Merkmale zusammen oder in beliebiger fachmännisch sinnvoller Kombination zum Gegenstand der Erfindung, auch unabhängig von ihrer Zusammenfassung in beschriebenen bzw. dargestellten Ausführungsbeispielen oder in den Ansprüchen.

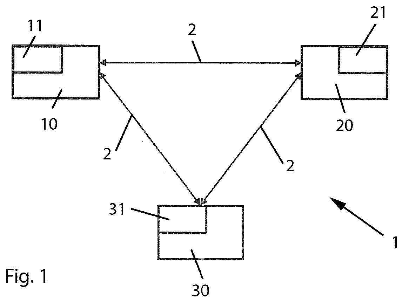

Die einzige Figur 1 zeigt schematisch einen Pitch-Antriebsregler 1 mit drei als Wechselrichter ausgebildeten Pitch-Antriebssteuergeräten 10, 20, 30, die in einer Rotornabe einer Windkraftanlage (nicht dargestellt) angeordnet sind. Neben einer (nicht dargestellten) Kommunikationsverbindung zu einer zentralen Steuerung der Windkraftanlage sind die Wechselrichter 10, 20, 30 (im Folgenden auch synonym gebraucht für Pitch-Antriebssteuergerät) untereinander in einer Querkommunikation 2 verbunden, die lokal realisiert ist und die Wechselrichter 10, 20, 30 wie durch die Pfeile dargestellt jeweils direkt miteinander verbindet.

Jeder der Wechselrichter 10, 20, 30 weist eine nicht dargestellte Recheneinheit auf, die zur Steuerung der Wechselrichter 10, 20, 30 in fachüblicher Weise eingerichtet ist. Darüber hinaus ist die Recheneinheit zur Durchführung der Querkommunikation 2 eingerichtet, wonach die Wechselrichter direkt untereinander Daten in der beschriebenen Weise austauschen können.

Um die Wechselrichter 10, 20, 30 lokal auch ohne ein gesondertes Installationsgerät ansprechen und Eingaben vornehmen zu können, weist jeder der Wechselrichter 10, 20, 30 eine lokale Eingabeschnittstelle 11, 21, 31 zur Benutzereingabe und Benutzerinformation auf (Human Machine Interface HMI).

Ohne auf die nachfolgend beschriebenen Verfahren und Verfahrensschritte beschränkt zu sein, können insbesondere folgende Funktionen zur Ausführung in den Recheneinheiten implementiert sein, die gerade im Umfeld von Windkraftanlagen sehr sinnvoll genutzt werden können.

Die Querkommunikation lässt sich bei einem Servicefall mit Austausch eines der Wechselrichter wie nachstehend erläutert sinnvoll nutzen, wobei im Rahmen der implementierten Verfahrensschritte alle gemeinsam, aber auch eine beliebige Auswahl der nachstehenden Verfahren oder Funktionen implementiert werden kann.

Über die Querkommunikation 2 der Wechselrichter 10, 20, 30 wird ein Abbild der (Parameter-) Einstellungen und bevorzugt auch der Software eines der Wechselrichter 10 oder 20 oder 30 auf die beiden anderen Wechselrichter 20, 30 oder 10, 30 oder 10, 20 übertragen und dort gespeichert. Muss nun einer der Wechselrichter 10 oder 20 oder 30 aufgrund bspw. eines Defekts in der Hardware getauscht werden, ist dies von den verbleibenden Wechselrichtern 20, 30 oder 10, 30 oder 10, 20 über bspw. eine andere Seriennummer erkennbar. Durch eine einfache Interaktion (bspw. einen Tastendruck) mit dem Benutzer (insbesondere über die entsprechende Eingabeschnittstelle 11 oder 21 oder 31) wird ein Vorgang (Verfahren) angestoßen, wonach dem neu eingesetzten Wechselrichter 10 oder 20 oder 30 über die Querkommunikation 2 die Einstellungen und bevorzugt auch die Software aus den in mindestens einem der verbleibenden zwei Wechselrichtern 20, 30 oder 10, 30 oder 10, 20 gespeicherten Abbildern aufgespielt werden. Ein erfolgreiches Aufspielen kann bspw. über eine LED der Eingabeschnittstelle 11 oder 21 oder 31 eindeutig signalisiert werden. Der Vorgang des Erkennens und Überspielens eines Abbilds kann u.U. auch automatisch ohne Tastendruck durch den Benutzer angestoßen werden, bspw. nach Detektion eines neuen Wechselrichters 10 oder 20 oder 30 durch Feststellen einer neuen Seriennummer in der Querkommunikation mit den beiden anderen Wechselrichtern 20, 30 oder 10, 30 oder 10, 20.

Nach dem erfolgreichen Aufspielen hat der neue Wechselrichter 10 oder 20 oder 30 genau dieselbe Software und dieselben Parameterdaten erhalten, mit denen auch das ausgetauschte Gerät betrieben wurde. Er verhält sich exakt gleich.

Ein im Stand der Technik übliches Vorgehen für den Tausch eines Wechselrichters ist, dass der Wechselrichter entweder vor dem Transport in die Rotornabe der Windkraftanlage manuell mit einem Laptop voreingestellt wird oder das Einstellen vor Ort in der Rotornabe mit einem Laptop als Inbetriebnahmegerät erfolgt. Hierbei ergibt sich ein erhöhter Aufwand in der Logistik, und es muss vor dem Servicefall exakt bekannt sein, welcher Wechselrichter in der Nabe defekt ist. Ferner kann sich das Problem ergeben, dass bei einem Defekt des alten Wechselrichters möglicherweise dessen Parameter nicht mehr aus diesem ausgelesen werden können. Dies erfordert dann eine vollständige Neukonfiguration, sofern die Einstellparameter irgendwo separat gespeichert und aktuell gehalten sind.

Mit dem vorgeschlagenen Verfahren kann ein defekter Wechselrichter 10 oder 20 oder 30 ohne komplexes oder zusätzliches Equipment (wie bspw. einem Laptop als Inbetriebnahmegerät) in der Rotornabe getauscht und eingestellt werden. Das ist besonders vorteilhaft aufgrund der beengten räumlichen Verhältnisse in der Rotornabe.

Der neue Wechselrichter 20, 30 oder 10, 30 oder 10, 20 erhält nach Durchführen des vorgeschlagenen Verfahrens darüber hinaus ein exaktes Abbild der Einstellungen und bevorzugt auch der Software des defekten Wechselrichters 10 oder 20 oder 30, so dass er sich nach dem Tausch daher exakt wie der vorherige verhält. Der Vorgang ist deutlich sicherer gegen Fehler als die im Stand der Technik angewandten Austauschverfahren bei einer gleichzeitigen Zeitersparnis für den Wechselrichtertausch. Durch den Entfall der Vorkonfiguration wird auch die Ersatzteillogistik vereinfacht.

Eine weitere vorteilhafte Funktion der erfindungsgemäß vorgeschlagenen Querkommunikation 2 ergibt sich daraus, dass die Wechselrichter 10, 20, 30 Messgrößen, Regelgrößen oder in ihrer Einheit berechnete Größen zeitlich synchron untereinander austauschen können. Üblich ist heute schon, dass ein einzelner Wechselrichter 10, 20, 30 den Zustand von Hardwarekomponenten durch Überwachung von Messgrößen (z.B. Schwellwerterkennung, Prüfen gegen einen gültigen Wertebereich, Langzeitauswertung des Mittelwertes, Fast Fourier Transforms,... ) bestimmen kann, bspw. aus erfassten Sensordaten oder anderen Kontrollgrößen. Hierdurch lässt sich die Zustandsüberwachung für die einzelnen Wechselrichter 10, 20, 30 signifikant verbessern.

Durch Vergleich mit entsprechenden Daten aus mehreren Wechselrichtern 10, 20, 30, die in derselben Windkraftanlage betrieben werden, kann eine Diagnose (bspw. zum Auffinden von Fehlern oder zur Optimierung der Einstellparameter) verbessert werden. Üblicherweise erfolgt eine solche Diagnose bisher durch Offlineauswertung von Messdaten vieler Geräte aus dem Feld in einer zentralen Stelle. Durch die Querkommunikation 2 wird es möglich, eine solche Auswertung mit den Daten von bspw. drei Wechselrichtern 10, 20, 30 quasi online in den über die Querkommunikation miteinander verbundenen Wechselrichtern 10, 20, 30 in derselben Rotornabe durchzuführen. Diese Diagnose ist quasi online, weil die benötigten Daten über die Querkommunikation 2 so schnell übertragen werden, dass sie in den Wechselrichtern 10, 20, 30 de facto instantan zur Verfügung stehen.

Jeder Wechselrichter 10, 20, 30 kann die Messdaten gegen die aktuellen Werte oder auch Werte aus einem Langzeitspeicher mit den Werten der beiden parallelen Wechselrichter 20, 30 oder 10, 30 oder 20, 30 vergleichen. Denkbar ist hier bspw. der Vergleich von Messwerten (wie Temperaturen) zwischen den Wechselrichtern 10, 20, 30 auf Einhalten eines Toleranzbands.

Ein zu bewertender Messwert eines Wechselrichters 10, 20, 30 kann somit gegen einen Erwartungswert durch die Messdaten zweier anderer Wechselrichter 20, 30 oder 10, 30 oder 20, 30 geprüft werden. Die Diagnosetiefe kann dadurch erhöht werden.

In einer weiteren Ausprägung ist es zudem möglich, dass über einen externen Kommunikationskanal Diagnosedaten mit Wechselrichtern in Windkraftanlagen in demselben Windpark oder derselben Herstellerflotte ausgetauscht werden, was die Diagnosemöglichkeiten weiter erhöht.

Die vorgeschlagene Querkommunikation 2 ermöglicht auch einen schnellen lokalen Eingriff in die Pitch-Regelung durch ein Pitch-Antriebssteuergerät 10, 20, 30 für nur das durch das Pitch-Antriebssteuergerät 10, 20, 30 eingestellte Rotorblatt. Dies wird nachfolgend erläutert.

Im Stand der Technik erhält jeder Wechselrichter 10, 20, 30 einen Positionssollwert bspw. für die Drehstellung des Rotorblatts über die zentrale Steuerung der Windkraftanlage. Wenn die Pitch-Antriebsregelung in speziellen Positionen des Rotors (bspw. wenn das Rotorblatt den Turm der Windkraftanlage passiert) für dieses einzelne Rotorblattes reagieren soll, muss dies durch eine geänderte Sollwertvorgabe über die zentrale Steuerung erfolgen. Aufgrund der Verzögerung in der (hierfür üblicher Weise verwendeten) Feldbusübertragung ist eine solche Dynamik in der Pitch-Antriebsregelung nur bis zu einer gewissen Grenze möglich, da zunächst die Messwerte der Wechselrichter 10, 20, 30 durch die zentrale Steuerung eingeholt und daraus ein neuer Drehstellungssollwert errechnet werden muss.

Die erfindungsgemäße Querkommunikation ermöglicht einen solchen Eingriff in die Pitchregelung der Rotorblätter lokal innerhalb der Wechselrichter 10, 20, 30. Die Latenzen der Regelung aufgrund der Dauer der Datenübertragung zwischen dem Wechselrichter 10, 20, 30 und der zentralen Steuerung werden verringert und die Dynamik der Pitch-Antriebsregelung 1 verbessert sich.

Zudem ist es denkbar, dass bspw. Messwerte des Wechselrichters 10, 20, 30 des in Drehrichtung vorauseilenden Rotorblatts für die Pitchregelung des um 120° nacheilenden Blattes genutzt werden (z.B. prädiktive Lastmomentvorsteuerung). Die 120° ergeben sich bei einer bevorzugten Ausgestaltung der Windkraftanlagen mit drei im selben Winkelabstand angeordneten Rotorblättern. Dieser erfindungsgemäße Gedanke ist jedoch nicht auf eine solcher Anzahl oder Anordnung von Rotorblättern beschränkt und lässt sich beliebig übertragen.

Zudem ist es denkbar, dass aus den zeitsynchronen Messdaten der drei Wechselrichter 10, 20, 30 Rotorzustandsdaten berechnet werden. Ein denkbarer Ansatz ist hier die Ermittlung der Rotorlage bzw. Winkelgeschwindigkeit aus den Messdaten von Beschleunigungs- oder Stromsensoren. Durch die Messdaten der anderen Wechselrichter 20, 30 oder 10, 30 oder 10, 20 kann die Auswertung redundant und damit funktional sicher vorgenommen werden. Zusätzlich können auch Momentenverläufe oder Stromverläufe der parallelen Wechselrichter in die Berechnung einfließen.

Ein weiterer Vorteil der Querkommunikation 2 ergibt sich auch bei Sicherheitsmodulen in den Wechselrichtern 10, 20, 30. In Wechselrichtern 10, 20, 30 werden Sicherheitsfunktionen innerhalb von sogenannten Sicherheitsmodulen implementiert, die im Falle von Störungen insbesondere ein sicheres Stilllegen der Anlage ermöglichen sollen. Dazu werden die in den Sicherheitsmodulen erfassten und verarbeiteten Daten je nach erforderlichem Sicherheitsniveau (Safety Integrity Level) oftmals redundant (d.h. zweikanalig mit bspw. zweifach vorhandenen Sensoren) erfasst und plausibilisiert. Mit der erfindungsgemäß vorgeschlagenen Querkommunikation 2 kann die erforderliche Redundanz zwischen den im Querkommunikationsverbund befindlichen Wechselrichtern 10, 20, 30 aufgebaut werden. Dazu werden die sicherheitsrelevanten Messdaten sowie daraus berechnete Größen über die Querkommunikation an die Sicherheitsmodule der benachbarten Wechselrichter 20, 30 oder 10, 30 oder 20, 30 übertragen und dort durch eine redundante Berechnung plausibilisiert. Hierzu können Methoden zur Prüfsummenberechnung verwendet werden.

Durch den Verzicht auf die Redundanz im einzelnen Wechselrichter 10, 20, 30, d.h. bspw. einem mehrfachen Vorsehen derselben Sensoren, lassen sich Kostenvorteile erzielen.

Die vorstehend beschriebenen Verfahren, Verfahrensschritte oder Funktionen zeigen den hohen Wert der erfindungsgemäß vorgeschlagenen Querkommunikation 2 zwischen in einer gemeinsamen Rotornabe einer Windkraftanlage vorgesehenen Pitch-Antriebssteuergeräten 10, 20, 30. Über diese Anwendungen hinaus kann die vorgeschlagene Querkommunikation 2 auch bei der Realisierung weiterer Verfahren, Verfahrensschritte oder Funktionen sinnvoll genutzt werden.

### Bezugszeichenliste:

- 1: Pitch-Antriebsregler
- 2: Querkommunikation
- 10: als Wechselrichter ausgebildetes Pitch-Antriebssteuergerät
- 11: Eingabeschnittstelle
- 20: als Wechselrichter ausgebildetes Pitch-Antriebssteuergerät
- 21: Eingabeschnittstelle
- 30: als Wechselrichter ausgebildetes Pitch-Antriebssteuergerät
- 31: Eingabeschnittstelle

## Patentansprüche

1. Pitch-Antriebsregler einer Windkraftanlage mit mehreren an einer Rotornabe festgelegten Rotorblättern zur elektromotorischen Drehverstellung der Rotorblätter an der Rotornabe, wobei der Pitch-Antriebsregler (1) für jedes Rotorblatt jeweils mindestens ein Pitch-Antriebssteuergerät (10, 20, 30) zur Ansteuerung mindestens eines Pitch-Antriebsmotors aufweist, wobei das Pitch-Antriebssteuergerät (10, 20, 30) eine Ansteuerelektronik für den Pitch-Antriebsmotor, einen Steuerausgang zu dem Pitch-Antriebsmotor und eine Recheneinheit mit mindestens einem zum Betrieb des Pitch-Antriebssteuergeräts eingerichteten Prozessor aufweist, wobei jedes der Pitch-Antriebssteuergeräte (10; 20; 30) einen lokalen Kommunikationsanschluss aufweist und über diesen lokalen Kommunikationsanschluss mit den anderen Pitch-Antriebssteuergeräten (20, 30; 10, 30; 10, 20) der Windkraftanlage in einer Querkommunikation (2) verbunden ist oder verbindbar ist, **dadurch gekennzeichnet, dass** jedes der Pitch-Ansteuergeräte (10, 20, 30) einen externen Kommunikationsanschluss an eine zentrale Steuerung der Windkraftanlage aufweist.

2. Pitch-Antriebsregler nach Anspruch 1, **dadurch gekennzeichnet, dass** die Querkommunikation (2) als eine Feldbus-Kommunikation ausgebildet ist.

3. Pitch-Antriebsregler nach Anspruch 1, **dadurch gekennzeichnet, dass** die Querkommunikation (2) als eine Punkt-zu-Punkt-Kommunikation ausgebildet ist.

4. Pitch-Antriebsregler nach einem der vorgehenden Ansprüche, **dadurch gekennzeichnet, dass** die Pitch-Antriebssteuergeräte (10, 20, 30) des Pitch-Antriebsreglers dazu (1) einrichtet sind, eine oder mehrere der nachfolgend definierten Datenarten auszutauschen:
• Sollwerte
• Istwerte
• Messwerte
• Berechnete Werte
• Betriebsparameter des Pitch-Antriebssteuergeräts, einschließlich des Softwarestands von Applikationssoftware und/oder Firmware oder ein installierbares Datenverarbeitungsprogramm mit der Applikationssoftware und/oder der Firmware oder Software-Updates
• Zeitinformation
• Datenpakete aus Sicherheitsmodulen

5. Pitch-Antriebssteuergerät zur Ansteuerung eines Pitch-Antriebsmotors, wobei das Pitch-Antriebssteuergerät (10, 20, 30) eine Ansteuerelektronik, einen Steuerausgang zu dem Pitch-Antriebsmotor, eine Recheneinheit mit mindestens einem zum Betrieb des Pitch-Antriebssteuergeräts (10, 20, 30) eingerichteten Prozessor aufweist, wobei das Pitch-Antriebssteuergerät (10; 20; 30) einen lokalen Kommunikationsanschluss aufweist und über diesen lokalen Kommunikationsanschluss mit anderen Pitch-Antriebssteuergeräten (20, 30; 10, 30; 10, 20) der Windkraftanlage in einer Querkommunikation (2) verbindbar ist, **dadurch gekennzeichnet, dass** das Pitch-Ansteuergerät (10, 20, 30) einen externen Kommunikationsanschluss an eine zentrale Steuerung der Windkraftanlage aufweist.

6. Pitch-Antriebssteuergerät nach Anspruch 5, **dadurch gekennzeichnet, dass** der lokale Kommunikationsanschluss eine kabelgebundene elektrische und/oder optische Schnittstelle umfasst.

7. Pitch-Antriebssteuergerät nach einem der Ansprüche 5 oder **6,dadurch gekennzeichnet, dass** das Pitch-Antriebssteuergerät (10, 20, 30) integrierte und/oder anschließbare Sensoren zur Messwerterfassung aufweist und dass die Recheneinheit zur Bearbeitung der erfassten Messwerte eingerichtet ist.

8. Pitch-Antriebssteuergerät nach einem der Ansprüche 5 bis 7, **dadurch gekennzeichnet, dass** das Pitch-Antriebssteuergerät (10; 20; 30) ein Sicherheitsmodul umfasst, in dem Sicherheitsfunktionen implementiert sind, die auf Grundlage von in dem Sicherheitsmodul (10; 20, 30) erfassten und verarbeiteten Daten ausführbar sind, wobei die erfassten Daten zumindest auch von mindestens einem Pitch-Antriebssteuergerät (20, 30; 10, 30; 10, 20) in der Querkommunikation (2) erhaltene Daten beinhalten, wobei die Recheneinheit des Pitch-Antriebssteuergeräts (10; 20, 30) dazu eingerichtet ist, diese Daten in dem Sicherheitsmodul mit auszuwerten.

9. Pitch-Antriebssteuergerät nach einem der Ansprüche 5 bis 8, **dadurch gekennzeichnet, dass** die Recheneinheit des Pitch-Antriebssteuergeräts (10; 20, 30) dazu eingerichtet ist, Messwerte und/oder Sollwerte und/oder Rechenwerte zur Drehverstellung des Rotorblatts an andere in der Querkommunikation (2) verbundene Pitch-Antriebssteuergeräte (20, 30; 10, 30; 10, 20) zu senden und/oder von den anderen Pitch-Antriebssteuergeräten (20, 30; 10, 30; 10, 20) zu empfangen und aufgrund empfangener Messwerte und/oder Sollwerte lokal in die Pitch-Antriebsregelung (1) einzugreifen.

10. Pitch-Antriebssteuergerät nach einem der Ansprüche 5 bis 9, **dadurch gekennzeichnet, dass** die Recheneinheit des Pitch-Antriebssteuergeräts (10; 20; 30) dazu eingerichtet ist, Messwerte und/oder Sollwerte und/oder Rechenwerte von anderen Pitch-Antriebssteuergeräten (20, 30; 10, 30; 10, 20) zu empfangen und in dem Pitch-Antriebssteuergerät (10; 20, 30) selbst erfasste Messwerte und/oder Rechenwerte gegen einen Erwartungswert aus den von den anderen Pitch-Antriebssteuergeräten (20, 30; 10, 30; 10, 20) empfangenen Messwerten und/oder Sollwerten und/oder Rechenwerten zu überprüfen.

11. Pitch-Antriebssteuergerät nach einem der Ansprüche 5 bis 10, **dadurch gekennzeichnet, dass** das Pitch-Antriebssteuergerät (10, 20, 30) eine Eingabeschnittstelle (11, 21, 31) mit einer Benutzereingabeeinrichtung und mindestens einer Anzeigeeinrichtung aufweist.

12. Pitch-Antriebssteuergerät nach einem der Ansprüche 5 bis 11, **dadurch gekennzeichnet, dass** die Recheneinheit des Pitch-Antriebssteuergerät (10; 20; 30) dazu eingerichtet ist, Einstellparameter des Pitch-Antriebssteuergeräts (10; 20; 30) und/oder ein installierbares Abbild der Software über die Querkommunikation (2) auf ein anderes der Pitch-Antriebssteuergeräte (20, 30; 10, 30; 10, 20) zu übertragen und in dem anderen Pitch-Antriebssteuersystem (20, 30; 10, 30; 10, 20) zu speichern.

13. Pitch-Antriebssteuergerät nach Anspruch 12, **dadurch gekennzeichnet, dass** die Recheneinheit des Pitch-Antriebssteuergerät (10; 20; 30) dazu eingerichtet ist, bei dem Austausch eines der Pitch-Antriebssteuergeräte (10; 20; 30) der Windkraftanlage die Einstellparameter des Pitch-Antriebssteuergeräts (10; 20; 30) und/oder das installierbares Abbild der Software aus einem der anderen Pitch-Ansteuergeräte (20, 30; 10, 30; 10, 20) über die Querkommunikation (2) abzurufen und in der Recheneinheit des ausgetauschten Pitch-Antriebssteuersystem (10; 20; 30) einzurichten.

14. Verfahren zum Steuern eines Pitch-Antriebsreglers (1) einer Windkraftanlage entsprechend einem der Ansprüche 1 bis 4 mit mindestens zwei Pitch-Antriebssteuergeräten (10, 20, 30) entsprechend einem der Ansprüche 5 bis 13, **dadurch gekennzeichnet, dass** die Recheneinheiten der Pitch-Antriebssteuergeräte (10, 20, 30) dazu eingerichtet sind, mittels der Querkommunikation (2) miteinander zu kommunizieren und Daten untereinander auszutauschen und/oder zu speichern.

15. Verfahren nach Anspruch 14, **dadurch gekennzeichnet, dass** die Recheneinheiten der Pitch-Antriebssteuergeräte (10, 20, 30) zur Durchführung zumindest eines der nachstehenden Verfahrensschritte eingerichtet sind:
• Übertragen und Speichern der Einstellparameter eines der Pitch-Antriebssteuergeräte (10; 20; 30) und/oder eines installierbaren Abbilds der Software dieses einen der Pitch-Antriebssteuergeräte (10; 20; 30) mittels der Querkommunikation (2) auf ein anderes der Pitch-Antriebssteuergeräte (20, 30; 10, 30; 10, 20);
• Auslesen mittels der Querkommunikation (2) und Installieren der in einem der Pitch-Antriebssteuergeräte (10; 20; 30) gespeicherten Einstellparameter und/oder des gespeicherten installierbaren Abbilds der Software in einem anderen der Pitch-Antriebssteuergeräte (20, 30; 10, 30; 10, 20);
• Empfangen von Messwerten und/oder Sollwerten und/oder Rechenwerten von anderen Pitch-Antriebssteuergeräten (20, 30; 10, 30; 10, 20) mittels der Querkommunikation (2) und Überprüfen eines in dem Pitch-Antriebssteuergerät (10; 20; 30) selbst erfassten Messwerts oder Rechenwerts gegen einen Erwartungswert, der aus von den anderen Pitch-Antriebssteuergeräten (20, 30; 10, 30; 10, 20) empfangenen Messwerten und/oder Sollwerten und/oder Rechenwerten ermittelt wird;
• Senden von Messwerten und/oder Sollwerten und/oder Rechenwerten zur Drehverstellung des Rotorblatts an andere in der Querkommunikation (2) verbundene Pitch-Antriebssteuergeräte (10, 20, 30);
• Empfangen von Messwerten und/oder Sollwerten und/oder Rechenwerten zur Drehverstellung des Rotorblatts von den anderen Pitch-Antriebssteuergeräten (20, 30; 10, 30; 10, 20) mittels der Querkommunikation (2) und lokales Eingreifen in die Pitch-Antriebsregelung (1) aufgrund der empfangenen Messwerte und/oder Sollwerte und/oder Rechenwerte;
• Empfangen von Daten zumindest auch von mindestens einem Pitch-Antriebssteuergerät (10, 20, 30) mittels der Querkommunikation (2) und Auswerten dieser Daten in dem Sicherheitsmodul zur Umsetzung von Sicherheitsfunktionen.

## Claims

1. Pitch drive controller of a wind turbine, having a plurality of rotor blades fixed on a rotor hub for rotational adjustment of the rotor blades on the rotor hub by electric motor, wherein the pitch drive controller (1) has at least one pitch drive control device (10, 20, 30) for each rotor blade for actuating at least one pitch drive motor, wherein the pitch drive control device (10, 20, 30) has an electronic actuation unit for the pitch drive motor, a control output to the pitch drive motor and a computing unit with at least one processor configured for operating the pitch drive control device, wherein each of the pitch drive control devices (10; 20; 30) has a local communication connection and is or can be connected to the other pitch drive control devices (20, 30; 10, 30; 10, 20) of the wind turbine in a cross-communication (2) via said local communication connection **characterized in that** each of the pitch drive control devices (10, 20, 30) has an external communication connection to a central control of the wind turbine.

2. Pitch drive controller according to claim 1, **characterized in that** the cross-communication (2) is embodied as a field bus communication.

3. Pitch drive controller according to claim 1, **characterized in that** the cross-communication (2) is embodied as a point-to-point-communication.

4. Pitch drive controller according to any one of the preceding claims, **characterized in that** the pitch drive control devices (10, 20, 30) of the pitch drive controller (1) are configured to exchange one or more of the data types defined as follows:
• setpoints
• actual values
• measured values
• calculated values
• operating parameters of the pitch drive control device, including the software status of application software and/or firmware or an installable data processing program with the application software and/or the firmware or software updates
• time information
• data packets from safety modules

5. Pitch drive control device for actuating a pitch drive motor, wherein the pitch drive control device (10, 20, 30) is equipped with an electronic actuation unit, a control output to the pitch drive motor, a computing unit with at least one processor configured to operate the pitch drive control device (10, 20, 30), wherein the pitch drive control device (10; 20; 30) has a local communication connection and can be connected with other pitch drive control devices (20, 30; 10, 30; 10, 20) of the wind turbine in a cross-communication (2) via this local communication connection **characterized in that** the pitch drive control device (10, 20, 30) has an external communication connection to a central control of the wind turbine.

6. Pitch drive control device according to claim 5, **characterized in that** the local communication connection comprises a wired electrical and/or optical interface.

7. Pitch drive control device according to either of claims 5 or 6, **characterized in that** the pitch drive control device (10, 20, 30) includes integrated and/or connectable sensors for capturing measured values, and that the computing unit is configured to process the captured measured values.

8. Pitch drive control device according to any one of claims 5 to 7, **characterized in that** the pitch drive control device (10, 20, 30) comprises a safety module, in which safety functions are implemented that can be executed on the basis of data captured and processed in the safety module (10; 20, 30), wherein the captured data at least also contains data received from at least one pitch drive control device (20, 30; 10, 30; 10, 20) in the cross-communication (2), wherein the computing unit of the pitch drive control device (10; 20, 30) is configured to evaluate this data in the safety module as well.

9. Pitch drive control device according to any one of claims 5 to 8, **characterized in that** the computing unit of the pitch drive control device (10; 20, 30) is configured to transmit measured values and/or setpoints and/or calculation values for the rotational adjustment of the rotor blade to other pitch drive control devices (20, 30; 10, 30; 10, 20) connected in the cross-communication (2) and/or to receive them from the other pitch drive control devices (20, 30; 10, 30; 10, 20), and to intervene locally in the pitch drive control (1) on the basis of received measured values and/or setpoints.

10. Pitch drive control device according to any one of claims 5 to 9, **characterized in that** the computing unit of the pitch drive control device (10; 20; 30) is configured to receive measured values and/or setpoints and/or calculation values from other pitch drive control devices (20, 30; 10, 30; 10, 20) and to check measured values and/or calculation values captured in the pitch drive control device (10; 20, 30) itself against an expected value from the measured values and/or setpoints and/or calculation values received from the other pitch drive control devices (20, 30; 10, 30; 10, 20).

11. Pitch drive control device according to any one of claims 5 to 10, **characterized in that** the pitch drive control device (10, 20, 30) has an input interface (11, 21, 31) with a user input device and at least one display device.

12. Pitch drive control device according to any one of claims 5 to 11, **characterized in that** the computing unit of the pitch drive control device (10; 20; 30) is configured to transmit setting parameters of the pitch drive control device (10; 20; 30) and/or an installable image of the software to another of the pitch drive control devices (20, 30; 10, 30; 10, 20) via the cross-communication (2) and to store them in the other pitch drive control system (20, 30; 10, 30; 10, 20).

13. Pitch drive control device according to claim 12, **characterized in that** the computing unit of the pitch drive control device (10; 20; 30) is configured to retrieve the setting parameters of the pitch drive control device (10; 20; 30) and/or the installable image of the software from one of the other pitch drive control devices (20, 30; 10, 30; 10, 20) via the cross-communication (2) and to set them up in the computing unit of the substituted pitch drive control system (10; 20; 30) when one of the pitch drive control devices (10; 20; 30) of the wind turbine is replaced.

14. Method for controlling a pitch drive controller (1) of a wind turbine according to any one of claims 1 to 4 with at least two pitch drive control devices (10, 20, 30) according to any one of claims 5 to 13, **characterized in that** the computing units of the pitch drive control devices (10, 20, 30) are configured to communicate with each other and to exchange data with each other and/or store data via the cross-communication (2).

15. Method according to claim 14, **characterized in that** the computing units of the pitch drive control devices (10, 20, 30) are configured to carry out at least one of the following method steps:
• Transmitting and storing the setting parameters of one of the pitch drive control devices (10; 20; 30) and/or an installable image of the software of this one of the pitch drive control devices (10; 20; 30) to another of the pitch drive control devices (20, 30; 10, 30; 10, 20) by means of the cross-communication (2);
• Reading out the setting parameters and/or the stored installable image of the software stored in one of the pitch drive control devices (10; 20; 30) by means of the cross-communication (2) and installing them in another of the pitch drive control devices (20, 30; 10, 30; 10, 20);
• Receiving measured values and/or setpoints and/or calculation values from other pitch drive control devices (20, 30; 10, 30; 10, 20) by means of the cross-communication (2) and checking a measured value and/or calculation value captured in the pitch drive control device (10; 20; 30) itself against an expected value which is derived from measured values and/or setpoints and/or calculation values received from the other pitch drive control devices (20, 30; 10, 30; 10, 20);
• Sending measured values and/or setpoints and/or calculation values for rotational adjustment of the rotor blade to other pitch drive control devices (10, 20, 30) connected in the cross-communication (2);
• Receiving measured values and/or setpoints and/or calculation values for rotational adjustment of the rotor blade from the other pitch drive control devices (20, 30; 10, 30; 10, 20) by means of the cross-communication (2) and local intervention in the pitch drive control (1) based on the measured values and/or setpoints and/or calculation values received;
• Receiving data also at least from at least one pitch drive control device (10, 20, 30) by means of the cross-communication (2) and evaluating said data in the safety module for the purpose of implementing safety functions.

## Revendications

1. Contrôleur d'entraînement de pas d'une éolienne, comportant plusieurs pales de rotor fixées sur un moyeu de rotor pour le réglage en rotation des pales de rotor sur le moyeu de rotor à l'aide d'un moteur électrique, dans lequel le dispositif de commande d'entraînement en pas (1) comporte au moins un dispositif de commande d'entraînement en pas (10, 20, 30) pour chaque pale de rotor afin d'actionner au moins un moteur d'entraînement en pas, dans lequel le dispositif de commande d'entraînement en pas (10, 20, 30) comporte une unité d'actionnement électronique pour le moteur d'entraînement en pas, une sortie de commande vers le moteur d'entraînement en pas et une unité de calcul avec au moins un processeur configuré pour faire fonctionner le dispositif de commande d'entraînement en pas, dans lequel chacun des dispositifs de commande d'entraînement en pas (10 ; 20 ; 30) comporte une connexion de communication locale et est ou peut être connecté aux autres dispositifs de commande d'entraînement en pas (20, 30 ; 10, 30 ; 10, 20) de l'éolienne dans une communication croisée (2) via ladite connexion de communication locale, **caractérisé en ce que** chacun des dispositifs de commande d'entraînement en pas (10, 20, 30) comporte une connexion de communication externe vers une commande centrale de l'éolienne.

2. Contrôleur d'entraînement de pas selon la revendication 1, **caractérisé en ce que** la communication croisée (2) est réalisée sous la forme d'une communication par bus de terrain.

3. Contrôleur d'entraînement de pas selon la revendication 1, **caractérisé en ce que** la communication croisée (2) est réalisée sous la forme d'une communication point à point.

4. Contrôleur d'entraînement en tangage selon l'une quelconque des revendications précédentes, **caractérisé en ce que** les dispositifs de commande d'entraînement en tangage (10, 20, 30) du contrôleur d'entraînement en tangage (1) sont configurés pour échanger un ou plusieurs des types de données définis comme suit :
• valeurs de consigne
• valeurs réelles
• valeurs mesurées
• valeurs calculées
• Paramètres de fonctionnement du dispositif de commande du variateur de pas, y compris l'état du logiciel d'application et/ou du micrologiciel ou d'un programme de traitement de données installable avec le logiciel d'application et/ou le micrologiciel ou les mises à jour logicielles.
• informations temporelles
• paquets de données provenant des modules de sécurité

5. Dispositif de commande d'entraînement en pas pour actionner un moteur d'entraînement en pas, dans lequel le dispositif de commande d'entraînement en pas (10, 20, 30) est équipé d'une unité d'actionnement électronique, d'une sortie de commande vers le moteur d'entraînement en pas, d'une unité de calcul avec au moins un processeur configuré pour faire fonctionner le dispositif de commande d'entraînement en pas (10, 20, 30), dans lequel le dispositif de commande d'entraînement en pas (10 ; 20 ; 30) dispose d'une connexion de communication locale et peut être connecté à d'autres dispositifs de commande d'entraînement en pas (20, 30 ; 10, 30 ; 10, 20) de l'éolienne dans une communication croisée (2) via cette connexion de communication locale, **caractérisé en ce que** le dispositif de commande d'entraînement en pas (10, 20, 30) dispose d'une connexion de communication externe vers une commande centrale de l'éolienne.

6. Dispositif de commande d'entraînement en pas selon la revendication 5, **caractérisé en ce que** la connexion de communication locale comprend une interface électrique et/ou optique câblée.

7. Dispositif de commande d'entraînement en pas selon l'une ou l'autre des revendications 5 ou 6, **caractérisé en ce que** le dispositif de commande d'entraînement en pas (10, 20, 30) comprend des capteurs intégrés et/ou connectables pour capturer des valeurs mesurées, et **en ce que** l'unité de calcul est configurée pour traiter les valeurs mesurées capturées.

8. Dispositif de commande d'entraînement en tangage selon l'une quelconque des revendications 5 à 7, **caractérisé en ce que** le dispositif de commande d'entraînement en tangage (10, 20, 30) comprend un module de sécurité, l' , dans lequel sont mises en œuvre des fonctions de sécurité qui peuvent être exécutées sur la base de données capturées et traitées dans le module de sécurité (10 ; 20, 30), les données capturées contenant au moins également des données reçues d'au moins un dispositif de commande d'entraînement en tangage (20, 30 ; 10, 30 ; 10, 20) dans la communication croisée (2), l'unité de calcul du dispositif de commande d'entraînement en tangage (10 ; 20, 30) étant configurée pour évaluer également ces données dans le module de sécurité.

9. Dispositif de commande d'entraînement en pas selon l'une quelconque des revendications 5 à 8, **caractérisé en ce que** l'unité de calcul du dispositif de commande d'entraînement en pas (10 ; 20, 30) est configurée pour transmettre des valeurs mesurées et/ou des valeurs de consigne et/ou des valeurs de calcul pour le réglage en rotation de la pale de rotor à d'autres dispositifs de commande d'entraînement en pas (20, 30 ; 10, 30 ; 10, 20) connectés dans la communication croisée (2) et/ou pour les recevoir des autres dispositifs de commande d'entraînement en pas (20, 30 ; 10, 30 ; 10, 20), et pour intervenir localement dans la commande d'entraînement en pas (1) sur la base des valeurs mesurées et/ou des valeurs de consigne reçues.

10. Dispositif de commande d'entraînement en pas selon l'une quelconque des revendications 5 à 9, **caractérisé en ce que** l'unité de calcul du dispositif de commande d'entraînement en pas (10 ; 20 ; 30) est configurée pour recevoir des valeurs mesurées et/ou des points de consigne et/ou des valeurs de calcul provenant d'autres dispositifs de commande d'entraînement en pas (20, 30 ; 10, 30 ; 10, 20) et pour vérifier les valeurs mesurées et/ou les valeurs de calcul capturées dans le dispositif de commande d'entraînement en pas (10 ; 20, 30) lui-même par rapport à une valeur attendue à partir des valeurs mesurées et/ou des points de consigne et/ou des valeurs de calcul reçues des autres dispositifs de commande d'entraînement en pas (20, 30 ; 10, 30 ; 10, 20).

11. Dispositif de commande d'entraînement en pas selon l'une quelconque des revendications 5 à 10, **caractérisé en ce que** le dispositif de commande d'entraînement en pas (10, 20, 30) comporte une interface d'entrée (11, 21, 31) avec un dispositif d'entrée utilisateur et au moins un dispositif d'affichage.

12. Dispositif de commande d'entraînement en pas selon l'une quelconque des revendications 5 à 11, **caractérisé en ce que** l'unité de calcul du dispositif de commande d'entraînement en pas (10 ; 20 ; 30) est configurée pour transmettre des paramètres de réglage du dispositif de commande d'entraînement en pas (10 ; 20 ; 30) et/ou une image installable du logiciel à un autre des dispositifs de commande d'entraînement en pas (20, 30 ; 10, 30 ; 10, 20) via la communication croisée (2) et à les stocker dans l'autre système de commande d'entraînement en pas (20, 30 ; 10, 30 ; 10, 20).

13. Dispositif de commande d'entraînement en pas selon la revendication 12, **caractérisé en ce que** l'unité de calcul du dispositif de commande d'entraînement en pas (10 ; 20 ; 30) est configurée pour récupérer les paramètres de réglage du dispositif de commande d'entraînement en pas (10 ; 20 ; 30) et/ou l'image installable du logiciel à partir de l'un des autres dispositifs de commande d'entraînement en pas (20, 30 ; 10, 30 ; 10, 20) via la communication croisée (2) et à les configurer dans l'unité de calcul du système de commande d'entraînement en pas de remplacement (10 ; 20 ; 30) lorsque l'un des dispositifs de commande d'entraînement en pas (10 ; 20 ; 30) de l'éolienne est remplacé.

14. Procédé de commande d'un contrôleur d'entraînement de pas (1) d'une éolienne selon l'une quelconque des revendications 1 à 4, avec au moins deux dispositifs de commande d'entraînement de pas (10, 20, 30) selon l'une quelconque des revendications 5 à 13, **caractérisé en ce que** les unités de calcul des dispositifs de commande d'entraînement en pas (10, 20, 30) sont configurées pour communiquer entre elles et pour échanger des données entre elles et/ou stocker des données via la communication croisée (2).

15. Procédé selon la revendication 14, **caractérisé en ce que** les unités de calcul des dispositifs de commande d'entraînement en pas (10, 20, 30) sont configurées pour exécuter au moins l'une des étapes suivantes du procédé :
• Transmettre et stocker les paramètres de réglage de l'un des dispositifs de commande d'entraînement en pas (10 ; 20 ; 30) et/ou une image installable du logiciel de ce dispositif de commande d'entraînement en pas (10 ; 20 ; 30) à un autre des dispositifs de commande d'entraînement en (20, 30 ; 10, 30 ; 10, 20) au moyen de la communication croisée (2) ;
• Lecture des paramètres de réglage et/ou de l'image installable stockée du logiciel stocké dans l'un des dispositifs de commande d'entraînement en pas (10 ; 20 ; 30) au moyen de la communication croisée (2) et installation de ceux-ci dans un autre des dispositifs de commande d'entraînement en pas (20, 30 ; 10, 30 ; 10, 20) ;
• Réception de valeurs mesurées et/ou de points de consigne et/ou de valeurs de calcul provenant d'autres dispositifs de commande d'entraînement en pas (20, 30 ; 10, 30 ; 10, 20) au moyen de la communication croisée (2) et vérification d'une valeur mesurée et/ou d'une valeur de calcul capturée dans le dispositif de commande d'entraînement en pas (10 ; 20 ; 30) lui-même par rapport à une valeur attendue qui est dérivée des valeurs mesurées et/ou des points de consigne et/ou des valeurs de calcul reçues des autres dispositifs de commande d'entraînement en pas (20, 30 ; 10, 30 ; 10, 20) ;
• Envoi de valeurs mesurées et/ou de points de consigne et/ou de valeurs calculées pour le réglage de la rotation de la pale de rotor à d'autres dispositifs de commande d'entraînement en pas (10, 20, 30) connectés dans la communication croisée (2) ;
• Réception des valeurs mesurées et/ou des points de consigne et/ou des valeurs de calcul pour le réglage de la rotation de la pale de rotor provenant des autres dispositifs de commande d'entraînement du pas (20, 30 ; 10, 30 ; 10, 20) au moyen de la communication croisée (2) et intervention locale dans la commande d'entraînement du pas (1) sur la base des valeurs mesurées et/ou des points de consigne et/ou des valeurs de calcul reçus ;
• Réception de données provenant également d'au moins un dispositif de commande d'entraînement en pas (10, 20, 30) au moyen de la communication croisée (2) et évaluation desdites données dans le module de sécurité dans le but de mettre en œuvre des fonctions de sécurité.
